# EUROPÄISCHE PATENTSCHRIFT

(11) **EP 3 444 453 B1**
(45) Veröffentlichungstag und Bekanntmachung des Hinweises auf die Patenterteilung: **19.02.2020**
(21) Anmeldenummer: 18197494.0
(22) Anmeldetag: 11.07.2017
(51) Int. Cl.: F01M 5/00, F01M 11/02, F16H 57/04, B60T 1/08

(54) **MECHANIKSTRANG EINES FAHRZEUGANTRIEBS**
MECHANICS TRANSMISSION OF A VEHICLE DRIVE
TRANSMISSION MÉCANIQUE D'UN ENTRAÎNEMENT DE VÉHICULE

(30) Priorität: 23.07.2016 DE 102016009019
(43) Veröffentlichungstag der Anmeldung: 20.02.2019
(62) Teilanmeldung aus: 17180641.7
(73) Patentinhaber: MAN Truck & Bus SE, 80995 München (DE)
(72) Erfinder: Schneider, Bernhard, 85250 Wollomoos (DE)
(74) Vertreter: v. Bezold & Partner Patentanwälte - PartG mbB

(56) Entgegenhaltungen:
- WO-A1-03/006850
- DE-A1- 10 058 110
- DE-A1- 19 625 357
- US-A- 2 487 215

## Beschreibung

Die vorliegende Erfindung betrifft einen Mechanikstrang eines Fahrzeugantriebs. Insbesondere ist ein Mechanikstrang zur integrierten Druckspeicherung und/oder Leitungsführung eines Fluids beschrieben.

Herkömmliche Gehäuse für Antriebsstrangkomponenten umfassen integrierte Wasserkühlungen. Beispielsweise beschreibt das Dokument US 2009/0173185 A1 ein zylindrisches Gehäuse, in dem ein Getriebe eines Außenbordmotors angeordnet ist. In das Gehäuse sind wasserführende Kanäle zur Kühlung des Getriebes angeordnet. Auch das Dokument DE 196 41 052 A1 beschreibt einen Zylinderblock für einen V-Motor. Zwischen den Zylinderreihen des V-Motors ist ein Kühlmittelkanal angeordnet.

Das Dokument US 2,487,215 A beschreibt ein Ölkühlungssystem für Brennkraftmaschinen, welches U-förmige Rohrleitungen umfasst, die innerhalb des Kurbelgehäuses der Brennkraftmaschine am Boden mit Klemmen befestigt sind.

Das Dokument DE 100 58 110 A1 beschreibt ein Automatikgetriebe mit einer Kühlanordnung aus einem oder mehreren Wärmetauschern, die in das Getriebe integriert sind und Kühlkanäle senkrecht zu einer Getriebeachse umfassen kann.

Das Dokument DE 196 25 357 A1 beschreibt einen Wärmetauscher, der in ein Getriebegehäuse seitlich integriert oder an der Unterseite angebaut ist und zwei Kühlschlangen umfasst, von denen die eine das Kühlmedium senkrecht zur Getriebeachse führt und die zweite das Arbeitsmedium eines Retarders führt und bei einem Bremsvorgang Wärme an die erste Kühlschlange abgibt.

Das Dokument WO 03/006850 A1 beschreibt einen Wärmetauscher mit Rohrleitungen, die entlang einer Längsrichtung eines Retardergehäuses wahlweise an dessen äußerer Oberfläche oder durch das Innere eines doppelwandigen Getriebegehäuses geführt werden.

Herkömmlicherweise umfassen bei einem Kraftfahrzeug, insbesondere einem Nutzfahrzeug, pneumatische Systeme, hydraulische Systeme und Wärmetransportkreisläufe separate Leitungsführungen und Fluidspeicher. Aufgrund von Randbedingungen und begrenztem Bauraum ist es schwierig, die Leitungsführung zu minimieren und die Fluidspeicherung in direkter räumlicher Zuordnung zu funktionellen Systemkomponenten wie beispielsweise Kompressoren, Wärmetauschern, Aktuatoren oder Steuerventilen anzuordnen.

Beispielsweise beschreibt das Dokument DE 10 2013 201 789 A1 ein herkömmliches Kühlsystem für einen Intarder oder Retarder. Ein Wärmetauscher des Intarders bzw. Retarders ist über Kühlwasserleitungen mit einem Hauptkühler des Fahrzeugs und einem vom Kraftstoffverbrauch unabhängigen Zusatzkühler verbunden.

Jedoch führen fahrzeugweit vernetzte Fluidsysteme, beispielsweise zur Verbesserung der Energieeffizienz oder Betriebssicherheit, zu einer zunehmenden Komplexität der Leitungssysteme und Fluidspeicher, die durch den verfügbaren Bauraum begrenzt ist. Auch sind Wartung und Sichtkontrolle solcher Fluidsysteme durch ihre Komplexität und Unzugänglichkeit erschwert.

Somit besteht die Aufgabe, die Speicherung und Leitungsführung von Fluiden in einem Fahrzeug platzsparender auszuführen. Eine alternative oder weitere Aufgabe ist, Fluidkreisläufe zumindest abschnittsweise wartungsfrei auszuführen.

Diese Aufgabe oder Aufgaben werden durch einen Mechanikstrang eines Fahrzeugantriebs mit den Merkmalen des Hauptanspruchs gelöst. Vorteilhafte Ausführungen und Anwendungen sind Gegenstand der abhängigen Ansprüche und werden im Folgenden unter teilweiser Bezugnahme auf die Figuren näher erläutert.

Gemäß einem ersten Aspekt ist ein Mechanikstrang zum Antrieb eines Fahrzeugs, insbesondere eines Nutzfahrzeugs, bereitgestellt. Der Mechanikstrang umfasst ein zur Aufnahme eines Schmierstoffs abgedichtetes Gehäuse mit mindestens einer Gehäusewand; eine im Gehäuse angeordnete und vom Schmierstoff benetzte Mechanik mit mindestens einer Welle zur Übertragung von Antriebsleistung in Längsrichtung; und eine Vielzahl an Kanälen zur Aufnahme eines Fluids, wobei zumindest Abschnitte der Kanäle innerhalb der Gehäusewand in Längsrichtung verlaufen und durch die Gehäusewand vom Schmierstoff getrennt sind.Die Kanäle stehen mit einem Wärmekreislauf in Fluidverbindung oder sind mit einem Wärmekreislauf in Fluidverbindung bringbar.

Ausführungsbeispiele des Mechanikstrangs können Vorrichtungen zur Druckspeicherung und/oder zur Leitungsführung des Fluids ohne zusätzlichen Bauraum ergänzen oder vollständig oder teilweise ersetzen. Durch die Anordnung der Kanäle innerhalb der Gehäusewand können die Kanäle vor äußeren mechanischen und Witterungseinflüssen geschützt und zumindest abschnittsweise wartungsfrei sein.

Eine Längsachse der mindestens einen Welle kann die Längsrichtung definieren. Ausführungsbeispiele des Mechanikstrangs können eine Leitungsführung des Fluids in die Längsrichtung und die Übertragung der Antriebsleistung in die Längsrichtung platzsparend und/oder wartungsfrei vereinen.

Ein mit dem Mechanikstrang mechanisch gekoppeltes Modul kann über die Kanäle in Fluidverbindung stehen oder gebracht werden mit Fluidanschlüssen, Fluidquellen und/oder Fluidsenken, die in Längsrichtung vom Modul beabstandet sind, beispielsweise ohne zusätzlichen Bauraum für Fluidleitungen. Alternativ oder ergänzend können über den Mechanikstrang mechanisch gekoppelte Module über die Kanäle in Fluidaustausch stehen oder gebracht werden.

Soweit nicht ausdrücklich anders bestimmt, können sich die Begriffe "Kanal" und "Kanäle" auf einen zusammenhängenden Kanalabschnitt bzw. mehrere Kanalabschnitte beziehen, die innerhalb der Gehäusewand angeordnet sind. Eine für den "Kanal" oder die "Kanäle" beschriebene Eigenschaft kann zumindest abschnittsweise vorliegen.

Jeder der Kanäle kann jeweils durch die Gehäusewand vom Schmierstoff getrennt sein, beispielsweise indem eine zum Gehäuseinneren hin verbleibende Wandstärke der Gehäusewand den Kanal und das Gehäuseinnere trennt. Das Fluid im Kanal und der Schmierstoff können unvermischte und/oder verschiedene Fluide sein.

Die Kanäle oder eine Teilmenge der Kanäle können miteinander in Fluidverbindung stehen. Das Gehäuseinnere und die Kanäle können jeweils ohne Fluidverbindung sein.

Die Kanäle können nur durch die Gehäusewand vom Schmierstoff getrennt sein. Eine Wandung der Kanäle kann integral-einstückig mit der Gehäusewand sein. Die Kanäle können die einzigen Hohlräume in einer außerhalb der Kanäle massiven Gehäusewand sein.

Das Fluid kann eine Flüssigkeit, ein Gas und/oder mehrere Phasen umfassen, beispielsweise als Dispersion. Das Fluid kann ein Arbeitsmedium sein, insbesondere zur Druckspeicherung, zum Wärmetransport und/oder zur hydraulischen Steuerung. Optional nimmt das Fluid entlang der Kanäle unterschiedliche Aggregatzustände an, beispielsweise mit einem flüssigen Abschnitt und einem gasförmigen Abschnitt.

Die Kanäle können mit einem Überdrucksystem, einem Unterdrucksystem und/oder einem Hydrauliksystem in Fluidverbindung stehen oder bringbar sein. Die Kanäle können Teil eines Wärmekreislaufs, eines Überdrucksystems und/oder eines Hydrauliksystems sein. Durch die Kanäle kann sich der Wärmekreislauf, das Überdrucksystem und/oder das Hydrauliksystem in Längsrichtung erstrecken, beispielsweise ohne zusätzlichen Leitungsbauraum.

Die Kanäle können mit einer Umwälzpumpe, einer Wärmequelle und/oder einer Wärmesenke verbunden sein. Die Umwälzpumpe kann eine Zirkulation des Fluids zwischen der Wärmequelle und der Wärmesenke über die Kanäle antreiben.

Das Fluid kann ein Wärmeträger sein, beispielsweise ein Kühlmittel (auch: Kühlmedium) oder ein Heizmittel (auch: Heizmedium). Die Wärmeleitfähigkeit des Fluids kann mindestens 0,5 W/(m . K) sein. Alternativ oder ergänzend kann die spezifische Wärmekapazität des Fluids mindestens 5 kJ/(kg . K) sein.

Die mit dem Fluid gefüllten Kanäle können ein Druckreservoir (insbesondere ein Überdruck- und/oder Unterdruckreservoir) bilden, beispielsweise ohne zusätzlichen Bauraum für einen separaten Druckspeicher. Beispielsweise können die Kanäle mit einem Druckluftkompressor und/oder einer Vakuumpumpe verbunden sein und/oder in Fluidverbindung mit einem Druckluftverbraucher des Fahrzeugs stehen.

Alternativ oder ergänzend können die Kanäle dazu ausgebildet sein, mittels des Fluids Signale, Kräfte und/oder (hydraulische oder pneumatische) Energie in die Längsrichtung zu übertragen. Dazu können die Kanäle an zwei oder mehr (beispielsweise in Längsrichtung beabstandeten) Stellen jeweils mit einem Zylinder (beispielsweise einem Hydraulik- oder Pneumatik-Zylinder) verbunden sein.

Die Kanäle können parallel zur Gehäusewand innerhalb der Gehäusewand angeordnet sein. Alternativ oder ergänzend können die Kanäle kreuzungsfrei innerhalb der Gehäusewand verlaufen. Beispielsweise können die Kanäle mäanderförmig in der Gehäusewand verlaufen.

Mindestens ein weiterer Abschnitt der Kanäle kann innerhalb und/oder parallel der Gehäusewand quer zur Längsrichtung verlaufen. Beispielsweise kann mindestens ein weiterer Abschnitt der Kanäle innerhalb und/oder parallel der Gehäusewand senkrecht zur Längsrichtung verlaufen.

Mindestens ein weiterer Abschnitt der Kanäle kann innerhalb und/oder parallel der Gehäusewand bogenförmig (beispielsweise auf einem Kreissegment) oder umlaufend (beispielsweise einfach umlaufend oder mehrfach spiralförmig umlaufend) um die mindestens eine Welle verlaufen. Alternativ oder ergänzend kann mindestens ein weiterer Abschnitt der Kanäle innerhalb und/oder parallel der Gehäusewand radial zur mindestens einen Welle verlaufen.

Mindestens einer der Kanäle, beispielsweise ein zur Längsrichtung quer verlaufender Abschnitt, kann in einen Anschluss münden. Der Anschluss kann von außerhalb des Gehäuses zugänglich sein.

Zwei oder mehr der Kanäle, beispielsweise innerhalb derselben Gehäusewand, können vom selben Fluid in zueinander entgegengesetzten Richtungen durchströmt werden. An einem Ende des Mechanikstrangs kann ein Modul angeordnet oder anordenbar sein, das die Kanäle verbindet (beispielsweise paarweise verbindet) für eine Umkehr der Strömungsrichtung im Modul.

An einem ersten Ende des Mechanikstrangs kann ein erstes Modul angeordnet sein. An einem in Längsrichtung gegenüberliegenden zweiten Ende des Mechanikstrangs kann ein zweites Modul angeordnet sein. Das erste Modul und das zweite Modul können über die Kanäle in Fluidverbindung stehen oder bringbar sein.

Beispielsweise können die Module dazu ausgebildet sein, das Fluid durch die Kanäle zwischen dem ersten Modul und dem zweiten Modul zu zirkulieren. Alternativ oder ergänzend weicht ein Verlauf der Kanäle in mindestens einem der Module von der Längsrichtung ab und/oder mündet in einen Fluidanschluss.

Die Kanäle können zur Übertragung hydraulischer Kräfte mittels des Fluids ausgebildet sein. Die Kanäle können beispielsweise am ersten Ende mit einem Bremskraftverstärker und am zweiten Ende mit mindestens einem Bremszylinder in Fluidverbindung stehen.

Das erste Modul und das zweite Modul können in Längsrichtung durch den Mechanikstrang räumlich getrennt sein. Das erste Modul und das zweite Modul können jeweils mit der Mechanik des Mechanikstrangs in Wirkverbindung stehen, beispielsweise jeweils mit einer Welle der Mechanik gekoppelt sein.

Das erste Modul kann einen Kompressor, beispielsweise für Druckluft (auch: Luftpresser), oder eine Abzweigung zu einem Kompressor umfassen. Das Fluid kann Druckluft sein. Der Kompressor kann am ersten Ende von einem Fahrzeugmotor, beispielsweise einer Brennkraftmaschine, angetrieben sein. Das zweite Modul kann einen Druckluftverbraucher oder eine Abzweigung oder einen Anschluss zu einem Druckluftverbraucher umfassen. Der Druckluftverbraucher kann ein Schaltgetriebe, eine Kupplung und/oder eine Einheit mit Schaltgetriebe und Kupplung sein.

Alternativ oder ergänzend kann das erste Modul einen Kühler, Kühlkreislauf oder eine Abzweigung oder einen Anschluss zu einem Kühler umfassen. Der Kühler kann ein Motorkühler oder Frontkühler des Fahrzeugs sein. Das Fluid kann Kühlwasser sein. Das zweite Modul kann einen Wärmetauscher oder eine Abzweigung oder einen Anschluss zu einem Wärmetauscher umfassen. Beispielsweise umfasst das zweite Modul eine Dauerbremse und/oder eine Sekundärbremse mit dem Wärmetauscher. Die Dauerbremse kann ausgangsseitig am Getriebe angekoppelt sein. Die Dauerbremse kann ein Retarder, ein Intarder oder eine Wirbelstrombremse sein. Ein Ölkreislauf der Dauerbremse oder der Sekundärbremse kann im Wärmetauscher mit dem Kühlwasser in Wärmeaustausch stehen oder bringbar sein.

Das Gehäuse kann metallisch sein. Die Gehäusewand kann ein Metallguss sein. Die Kanäle können integral-einstückig mit der Gehäusewand gegossen sein.

Die Mechanik kann eine Kurbelwelle einer Brennkraftmaschine, ein Schwungrad, eine Kupplung, ein Getriebe, eine Dauerbremse, eine elektrische Maschine und/oder einen Nebenabtrieb umfassen.

Die Kanäle können in Fluidverbindung mit einer Klimaanlage, beispielsweise einer Heizung, des Fahrzeugs stehen oder bringbar sein. Die Kanäle können mit einem Kühler und/oder einer Fahrzeugheizung verbunden sein. Die Kanäle können in der Gehäusewand in Wärmeaustausch mit der Mechanik stehen. Eine Abwärme der Mechanik und/oder der Brennkraftmaschine kann über den Kühler an die Fahrzeugumgebung und/oder über die Fahrzeugheizung in das Innere des Fahrzeugs abgegeben werden.

Alternativ oder ergänzend können die Kanäle die Wärmeleitfähigkeit und/oder die Masse der Gehäusewand gegenüber einer massiven Gehäusewand verringern, beispielsweise zur Wärmeisolation der Mechanik. Die Wärmeleitfähigkeit der Gehäusewand, beispielsweise senkrecht zur Gehäusewand und/oder quer zu den Kanälen, kann durch die Kanäle innerhalb der Gehäusewand weniger als die Hälfte der Wärmeleitfähigkeit einer vergleichbaren massiven Wand sein. Beispielsweise kann eine Wärmeleitfähigkeit der Gehäusewand höchstens halb so groß sein wie die Wärmeleitfähigkeit einer massiven Wand aus dem gleichen Material und mit der gleichen Wanddicke wie die Gehäusewand.

Die Kanäle können das Gehäuse mechanisch versteifen. Eine Steifigkeit, beispielsweise eine Biegesteifigkeit, der Gehäusewand mit den Kanälen kann größer sein als eine Steifigkeit, beispielsweise eine Biegesteifigkeit, einer massiven Wand aus dem gleichen Material und mit der gleichen Masse wie die Gehäusewand.

Alternativ oder ergänzend können an einer Außenfläche der Gehäusewand Rippen angeformt sein. Die Rippen können integral-einstückig mit der Gehäusewand sein. Die Kanäle, oder eine Teilmenge der Kanäle, können innerhalb und/oder entlang der Rippen verlaufen.

Eine Außenfläche der Gehäusewand umfasst Sollbruchstellen. Die Sollbruchstellen sind dazu ausgebildet, bei einem Druck in den Kanälen, der größer als eine vorbestimmte Druckschwelle ist, die Kanäle oder den betreffenden Kanal an der Sollbruchstelle mit dem Äußeren der Gehäusewand in Fluidverbindung zu bringen. Eine äußere Wanddicke zwischen den Kanälen und der äußeren Oberfläche (auch: Außenfläche) der Gehäusewand kann kleiner sein als eine innere Wanddicke zwischen den Kanälen und der innenseitigen Oberfläche (auch: Innenfläche) der Gehäusewand. Dadurch kann eine Bruchrichtung bei Überdruck vorbestimmt sein. Die äußere Wanddicke kann (beispielsweise abhängig von einer Fließgrenze des Materials der Gehäusewand) durch die vorbestimmte Druckschwelle bestimmt sein.

Das Gehäuse kann zwei oder mehr Gehäusewände umfassen. Die Kanäle, oder eine Teilmenge der Kanäle, können sich über zwei oder mehr Gehäusewände in Längsrichtung erstrecken. Die Gehäusewände können in Längsrichtung an Flanschflächen miteinander verbunden, beispielsweise verschraubt, sein. Die Kanäle können jeweils über Öffnungen in der Flanschfläche in Fluidverbindung stehen. Die Öffnungen eines jeden Kanals (der sich über die Gehäusewände hinweg erstreckt) können an den anliegenden Flanschflächen paarweise zur Deckung kommen. Die Kanäle können jeweils an anliegenden Flanschflächen fluchten. An der Flanschfläche können die Kanäle jeweils zu benachbarten Kanälen, dem Inneren des Gehäuses, und/oder dem Äußeren des Gehäuses abgedichtet sein.

Die Erfindung betrifft ferner die Verwendung eines Mechanikstrangs gemäß dem vorstehenden Aspekt zur Druckspeicherung und/oder zur Leitungsführung eines Fluids in einem Fahrzeug.

Gemäß einem weiteren Aspekt ist ein Kraftfahrzeug, vorzugsweise ein Nutzfahrzeug, mit einem Mechanikstrang gemäß dem erstgenannten Aspekt bereitgestellt.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: schematisch eine perspektivische Darstellung eines ersten Ausführungsbeispiels eines Mechanikstrangs eines Fahrzeugantriebs;
- Figur 2: schematisch eine perspektivische Darstellung eines zweiten Ausführungsbeispiels eines Mechanikstrangs eines Fahrzeugantriebs;
- Figur 3: schematisch einen Aufriss eines dritten Ausführungsbeispiels eines Mechanikstrangs eines Fahrzeugantriebs;
- Figur 4: schematisch eine Schnittdarstellung eines Gehäuses in einer Ebene parallel einer Längsrichtung;
- Figur 5: schematisch eine Ansicht einer Flanschfläche; und
- Figur 6: schematisch eine Schnittdarstellung einer Gehäusewand in einer Ebene senkrecht zur Längsrichtung.

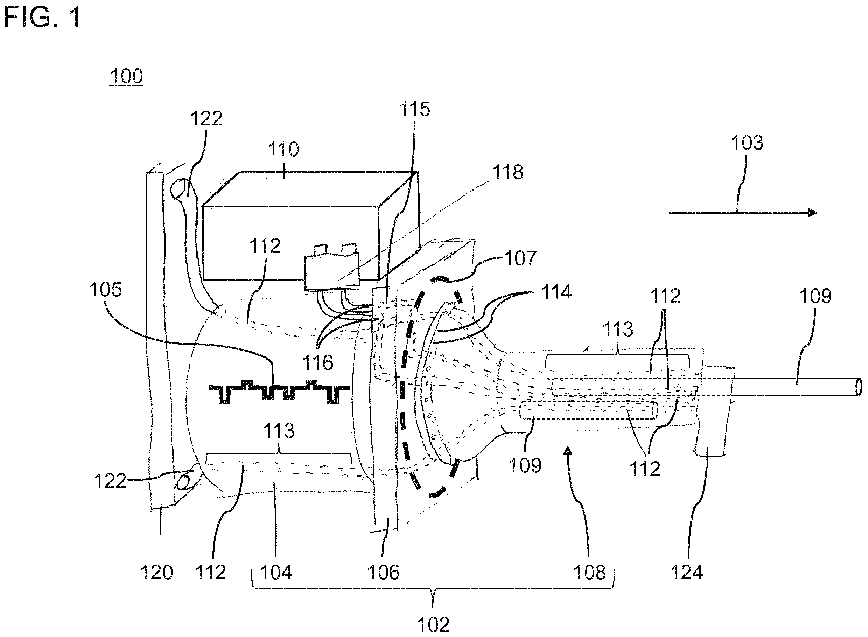

Figur 1 zeigt schematisch eine perspektivische Darstellung eines ersten Ausführungsbeispiels eines allgemein mit dem Bezugszeichen 100 bezeichneten Mechanikstrangs. Der Mechanikstrang 100 kann Teil eines Antriebsstrangs eines Fahrzeugs, beispielsweise eines Nutzfahrzeugs, sein.

Der Mechanikstrang 100 umfasst ein Gehäuse 102, das zur Aufnahme eines Schmierstoffs abgedichtet ist. Das Gehäuse 102 umfasst eine oder mehrere Gehäusewände 104, 106 und 108, in deren Innenbereich jeweils Komponenten 105, 107 und 109 einer Mechanik angeordnet und in Kontakt mit dem Schmierstoff stehen.

Im in Figur 1 gezeigten Ausführungsbeispiel umfasst das Gehäuse 102 eine Gehäusewand 104 einer Kurbelwelle 105 einer Brennkraftmaschine 110, eine Gehäusewand 106 eines Schwungrads 107 und eine Gehäusewand 108 eines Getriebes mit Wellen 109. Alternative Ausführungsbeispiele umfassen eine Teilkombination, beispielsweise nur die Gehäusewand 108 des Getriebes, oder zusätzliche Gehäuseabschnitte.

In die Gehäusewände 104, 106 und 108 sind Kanäle 112 zur statischen oder strömenden Aufnahme eines Fluids integriert. Die Mechanik 105, 107, 109 zur Übertragung von Antriebsleistung definiert eine Längsrichtung 103. Die Kanäle 112 sind, zumindest in Abschnitten 113, parallel zur Längsrichtung.

Die Kanäle 112 sind vom Innenbereich des Gehäuses 102 durch die innenseitige Restwanddicke der jeweilige Gehäusewand 104, 106 und 108 getrennt, so dass es zu keiner Vermischung mit dem Schmierstoff oder Beeinflussung der Schmierung der Mechanik 105, 107 bzw. 109 im Gehäuse 102 kommt.

Die Gehäusewände 104, 106 und 108 sind vorzugsweise aus Guss, insbesondere Stahlguss, gefertigt. Die Kanäle 112 sind, beispielsweise in der Gehäusewand 108 des Getriebes, als Gusskanäle eingebracht.

Indem die Kanäle 112 in die Gehäusewände 104, 106 und 108 integriert sind, kann ohne zusätzliche Bauraumanforderungen darin ein Fluid innerhalb des Fahrzeugs entlang des Antriebsstrangs 100 kommunizieren oder strömen. Alternativ oder ergänzend kann durch den Hohlraum der Kanäle 112 ein Druckspeicher gebildet sein. Das Fluid ist durch die Kanäle 112 entlang des Mechanikstrangs abzweigbar und/oder steht in Wärmeaustausch mit der Mechanik.

Die Kanäle 112 können, beispielsweise bei gleicher oder reduzierter Masse der Gehäusewände 104, 106 oder 108, das Gehäuse 102 versteifen. Alternativ oder ergänzend können die Kanäle 112 in an der Außenseite der Gehäusewand angeformten Rippen oder Gussnähten verlaufen.

Die Kanäle sind 112 zur Umgebung des Gehäuses 102 nach außen durch Sollbruchstellen getrennt. Beispielsweise ist an den Sollbruchstellen eine Wandung der Kanäle 112 zur Oberfläche der Gehäusewände 104, 106 oder 108 reduziert. Die außenseitige Wandung der Kanäle 112 oder die Oberfläche der Gehäusewand 104, 106 oder 108 entlang der Kanäle 112 wird auch als Außenhaut der Kanäle 112 bezeichnet. Die Außenhaut der Kanäle 112 kann bei Überschreiten eines durch die Stärke der Außenhaut definierten Überdrucks (beispielsweise beim Gefrieren des Fluids) die Sollbruchstelle nach außen hin aufbrechen. So können Risse in der Gehäusewand 104, 106 oder 108 zum Innenbereich des Gehäuses 102, ein Vermischen unterschiedlicher Fluide in benachbarten Kanälen 112 und/oder ein Vermischen zwischen dem Fluid im Kanal 112 und dem Schmierstoff im Innenbereich vermieden werden.

Das Fluid kann gasförmig oder flüssig sein. Unabhängig vom Aggregatzustand des Fluids kann das Fluid zur Steuerung, Kraftübertragung und/oder zum Wärmeaustausch ausgebildet sein. Beispielsweise kann das Fluid ein Kühlmittel umfassen zur Kühlung des Schmierstoffs und/oder der im Gehäuse 102 angeordneten Mechanik 105, 107 und/oder 109.

Die Kanäle 112 können teilweise oder vollständig untereinander in Fluidverbindung stehen. Beispielsweise kann ein erstes Teilsystem der Kanäle 112 ein erstes Fluid und ein vom ersten Teilsystem getrenntes zweites Teilsystem der Kanäle 112 ein zweites Fluid aufnehmen. Das erste Fluid kann gasförmig sein. Das zweite Fluid kann flüssig sein.

Soweit das Gehäuse 102 mehrere Gehäusewände umfasst (auch als mehrgliedriges Getriebegehäuse 102 oder Baukastensystem bezeichnet), beispielsweise die Gehäusewände 104, 106 und 108, weisen die Gehäusewände 104, 106 oder 108 Flanschflächen auf, beispielsweise zur Schraubverbindung der Gehäusewände.

Kanäle 112, die sich über mehrere der Gehäusewände 104, 106 und 108 erstrecken, umfassen Öffnungen 114 in der jeweiligen Flanschfläche, die bei aneinander anliegenden Flanschflächen in Flucht stehen zur Ausbildung eines durchgehenden Kanals 112 über die Flanschfläche der Gehäusewände 104, 106 und 108 hinweg. Beispielsweise können die Kanäle 112 über einen Kupplungsflansch der Gehäusewand 108 des Getriebes hinaus zur Gehäusewand 106 des Schwungrads 107 ausgeführt sein.

Dabei sind die fluchtenden Öffnungen 114 in den aneinander anliegenden Flanschflächen zu anderen Kanälen hin abgedichtet. Alternativ oder ergänzend können Querverbindungen zwischen den Kanälen 112 ausgebildet sein.

In einer ersten Variante sind die Öffnungen 114 in den Flanschflächen auf einem Kreis mit einem ersten Durchmesser angeordnet. Die Flanschflächen weisen auf einem zweiten Kreis mit größerem Durchmesser als der des ersten Kreises eine umlaufende Nut zur Aufnahme eines O-Rings zur Abdichtung der aneinander anliegenden Flanschflächen auf.

In einer zweiten Variante ist an den aneinander anliegenden Flanschflächen jeweils ein Falz angeformt zur formschlüssigen und druckdichten Verbindung der benachbarten Gehäusewände (beispielsweise der Gehäusewände 104 und 106 oder der Gehäusewände 106 und 108).

Alternativ oder ergänzend sind in einzelnen Gehäusewänden (beispielsweise in der Gehäusewand 106 des Schwungrads 107) und/oder einem Zwischenmodul oder Abschlussmodul, das über Flanschflächen mit der Gehäusewand 108 verbunden ist, richtungsändernde Abschnitte der Kanäle 112 eingearbeitet. Beispielsweise kann beim Übergang von einer Gehäusewand mit einer ersten Querabmessung zu einer Gehäusewand oder einem Modul mit einer größeren zweiten Querabmessung der Kanal 112 abweichend von der Längsrichtung verlaufen. Beispielsweise kann der Kanal 112 abschnittsweise radial zur Längsrichtung (insbesondere nach oben oder nach unten in der Darstellung der Figur 1) verlaufen. Dadurch können beispielsweise Anschlüsse 116 (für flexible Schlauchleitungen oder Rohre) zu den Kanälen 112 an zugangsgünstigen Stellen der Gehäusewand oder des Moduls angeordnet sein.

In dem in Figur 1 gezeigten Ausführungsbeispiel ist in einem massiven Abschnitt der Gehäusewand 106 des Schwungrads 107 ein Durchgangsloch 115, das den Kanal 112 mit einem Anschluss 116 verbindet. Anschlüsse 116 für Zu- und Ablauf sind beispielsweise mit einem Luftpresser 118 verbunden.

Eine in den Kanälen 112 bevorratete Druckluft kann zur Steuerung eines Schaltgetriebes eines Nutzfahrzeuges eingesetzt werden. Dazu zweigt einer der druckluftführenden Kanäle 112 zu einer pneumatischen Steuerung ab, die in Fluidverbindung mit dem Schaltgetriebe steht.

Alternativ oder ergänzend zum Anschluss des Luftpressers 118 erstreckt sich ein Teil der Kanäle 112 in der Gehäusewand 104 der Kurbelwelle 105 in Richtung eines Motorkühlers 120. Dadurch kann die Länge einer freiliegenden Verbindungsstrecke 122 zum Motorkühler minimiert werden. Beispielsweise zirkuliert in diesem Teil der Kanäle 112 Kühlwasser als das Fluid.

In einer dritten Variante, die mit jeder der vorstehenden Varianten kombinierbar ist, ist an der Ausgangsseite 108 des Getriebes ein Wärmetauscher 124 eines Intarders oder Retarders angeordnet. Ein ölführender Bremskreislauf des Wärmetauschers 124 ist mit dem Intarder bzw. Retarder verbunden. Ein kühlwasserführender Kühlkreislauf des Wärmetauschers 124 ist über zumindest einen Teil der Kanäle 112 mit der Motorkühlung 120 oder einem separaten Lüfter verbunden.

In einer vierten Variante, die mit jeder der vorstehenden Varianten kombinierbar ist, ist zumindest ein Teil der Kanäle 112 mit einer Klimaanlage, insbesondere einer Heizung, des Fahrzeugs verbunden.

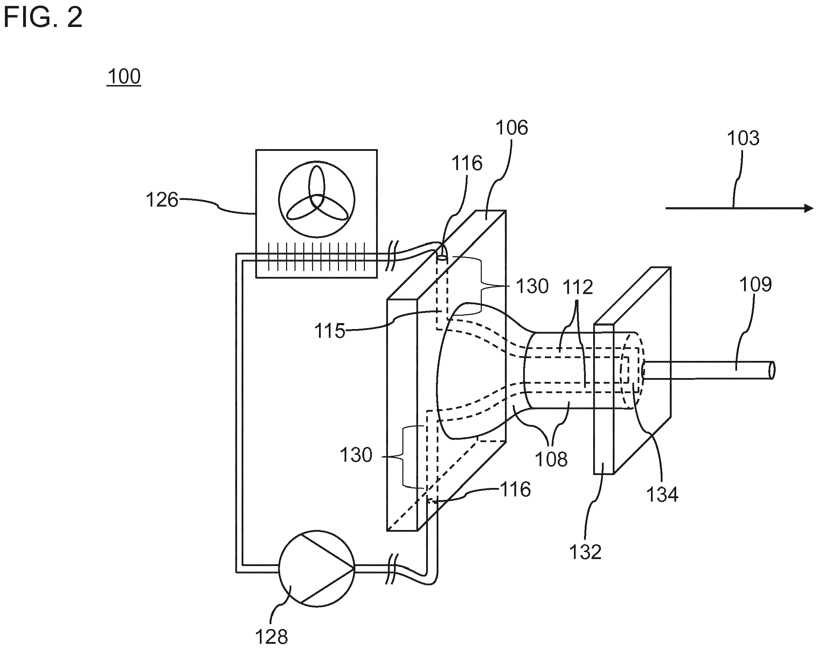

In dem in Figur 2 schematisch gezeigten zweiten Ausführungsbeispiel sind die Kanäle 112 mit einem belüfteten Plattenwärmetauscher 126 und einer Umwälzpumpe 128 zur Luftbeheizung verbunden. Das Fluid fördert über die Kanäle 112 die im Mechanikstrang 100 entstehende Abwärme der Mechanik 105, 107 und/oder 109 zur Klimaanlage, beispielsweise zum Plattenwärmetauscher 126.

Radiale Abschnitte 130 in die Gehäusewand 106 des Schwungrads 107 verbinden die in Längsrichtung verlaufenden Abschnitte der Kanäle 112 mit Anschlüssen 116 der Klimaanlage.

In jedem hierin genannten Ausführungsbeispiel oder Variante können die Kanäle 112 zur parallelen Durchströmung (auch: Parallelschaltung) oder zur sequentiellen Durchströmung (auch: Reihenschaltung) ausgebildet sein. Insbesondere können die Kanäle 112 durch ein Abschlussmodul 132 mit einer Querverbindung 134 paarweise in Fluidverbindung stehen. Im Abschlussmodul 132, oder durch eine Querverbindung innerhalb der Gehäusewand 108, kann eine Strömungsrichtung des Fluids umgekehrt werden.

In einer Ausgestaltung wird die Strömungsrichtung des Fluids mehrfach umgekehrt. Beispielsweise kann das Fluid die Gehäusewand 108 mäanderartig durchströmen für einen besonders wirksamen Wärmeaustausch mit der darin angeordneten Mechanik, beispielsweise dem Getriebe.

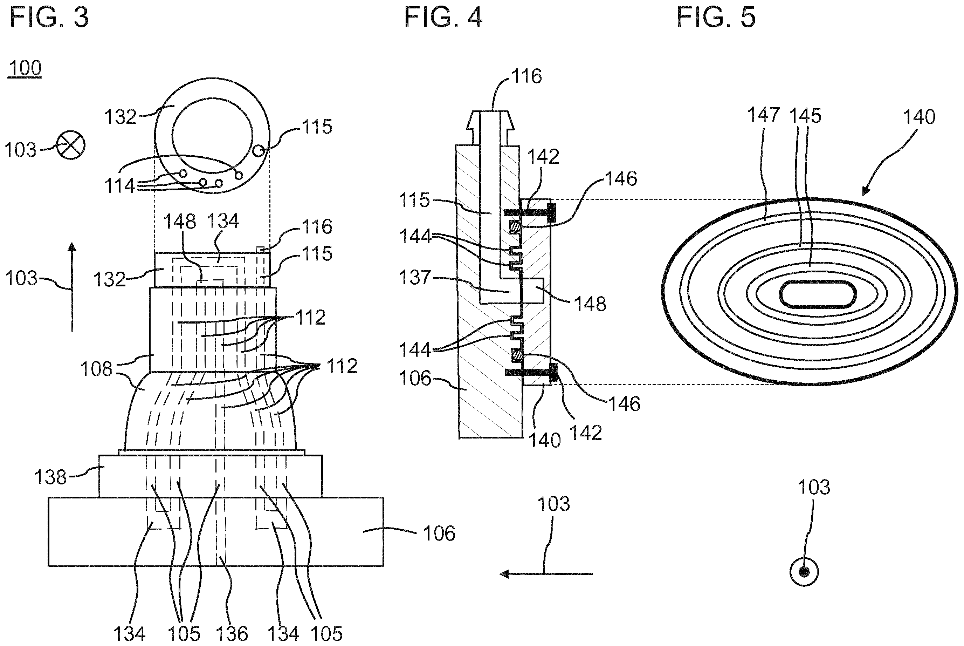

Figur 3 zeigt schematisch einen Aufriss eines dritten Ausführungsbeispiels eines Mechanikstrangs 100 eines Kraftfahrzeugs. Merkmale, die funktional oder strukturell einem Merkmal der vorherigen Ausführungsbeispiele entsprechen, sind mit gleichen Bezugszeichen versehen. Die hierbei gezeigten Module und Merkmale können auch mehrfach oder in jeder Unterkombination im Mechanikstrangs 100 angeordnet sein, beispielsweise für eine mehrfache Umkehrung der Strömungsrichtung in den Kanälen 112.

Eine Gehäusewand 108 eines Getriebes ist, optional über ein Zwischenmodul 138, mit der Gehäusewand 106 eines Schwungrads verbunden. Eine Gehäusewand des Zwischenmoduls 138 umfasst eine Vielzahl an Durchgangslöchern 115 parallel zur Gehäusewand des Zwischenmoduls und in räumlicher Zuordnung zu Querverbindungen 134 in der Gehäusewand 106 bzw. einer ersten Kanalöffnung 136. Die erste Kanalöffnung 136 mündet an einer dem Zwischenmodul 138 gegenüberliegenden Stirnfläche der Gehäusewand 106.

Figur 4 zeigt schematisch eine Schnittdarstellung eines Ausführungsbeispiels der Schwungradgehäusewand 106 in einer Schnittebene parallel zu der Längsrichtung 103. In der Gehäusewand 106 an der Stirnfläche (in der auch die erste Kanalöffnung 136 mündet) ist eine zweite Kanalöffnung 137 vorgesehen. Die zweite Kanalöffnung 137 ist von der ersten Kanalöffnung 136 seitlich (d. h. quer zur Längsrichtung 103) beabstandet.

Die zweite Kanalöffnung 137 ist über ein Durchgangsloch 115 mit einem Anschluss 116 in Fluidverbindung bringbar. Die erste Kanalöffnung 136 und die zweite Kanalöffnung 137 stehen über einen Flansch 140 in Fluidverbindung.

Figur 5 zeigt schematisch eine Ansicht eines Ausführungsbeispiels einer Flanschfläche des Flansches 140. Die Flanschfläche der Figur 5 ist zur Anlage an der Stirnfläche der Gehäusewand 106 ausgebildet.

Der Flansch 140 ist über mehrere Flanschschrauben 142 an der Stirnfläche der Gehäusewand 106 angepresst. Dabei werden die erste Kanalöffnung 136 und die zweite Kanalöffnung 137 über eine oder mehrere Dichtungen zum Außenbereich (außerhalb des Gehäuses 102) fluiddicht verschlossen. Vom Innenbereich (innerhalb des Gehäuses 102) sind die erste Kanalöffnung 136 und die zweite Kanalöffnung 137 durch die Gehäusewand 106 fluiddicht separiert.

Im in den Figuren 4 und 5 gezeigten Ausführungsbeispiel umfasst die Dichtung einen O-Ring 146. Der O-Ring ist in einer umlaufenden und geschlossenen Nut in der Stirnfläche der Gehäusewand 106 angeordnet. Der O-Ring 146 wird durch eine der umlaufenden und geschlossenen Nut entsprechende Auskragung 147 an der Flanschfläche fluiddicht in die Nut gepresst.

Alternativ oder ergänzend (beispielsweise innerhalb des vom O-Ring 146 umschlossenen Bereichs) ist an der Flanschfläche eine Labyrinthdichtung angeordnet. Die Labyrinthdichtung umfasst eine oder mehre umlaufende und geschlossene Aussparungen 144 in der Stirnfläche der Gehäusewand 106 sowie (zu den Aussparungen komplementäre) umlaufende und geschlossene Auskragungen 145 an der Flanschfläche des Flansches 140.

Die vorstehend für die erste Kanalöffnung 136 und die zweite Kanalöffnung 137 beschriebenen Optionen einer oder mehrerer Dichtungen in der Flanschfläche können entsprechend für jede Kanalöffnung 114 (und/oder jedes Durchgangsloch 115) an jeder Flanschfläche ausgebildet sein. Beispielsweise kann in der Flanschfläche um einzelne oder jede der Kanalöffnungen 114 (und/oder jedes Durchgangsloch 115) jeweils eine umlaufende O-Ring-Dichtung und/oder eine umlaufende Labyrinthdichtung vorgesehen sein. Dies ist beispielsweise vorteilhaft, falls durch die verschiedenen Kanalöffnungen 114 (und/oder Durchgangslöcher 115) einer Flanschfläche unterschiedliche Fluide strömen, um einen Fluidaustausch zwischen den Kanälen 112 an der Flanschfläche zu verhindern.

Ferner kann bei einer Mehrzahl an Kanalöffnungen 114 (und/oder Durchgangslöchern 115) in einer Flanschfläche mindestens eine die Mehrzahl umschließende Dichtung, beispielsweise eine O-Ring-Dichtung und/oder Labyrinthdichtung, in der Flanschfläche radial außerhalb aller Kanalöffnungen 114 (und/oder Durchgangslöcher 115) angeordnet sein. Alternativ oder ergänzend kann radial innerhalb aller Kanalöffnungen 114 (und/oder Durchgangslöcher 115) mindestens eine Dichtung (beispielsweise eine O-Ring-Dichtung und/oder Labyrinthdichtung) in der Flanschfläche vorgehsehen sein. Eine oder mehrere die Mehrzahl radial innerhalb und/oder außerhalb umlaufende Dichtungen können beispielsweise eine größere Dichte der Kanäle 112 (beispielsweise einen kleineren Abstand zwischen den Kanälen 112) in der Gehäusewand ermöglichen, vorzugsweise falls in den Kanälen 112 dasselbe Fluid strömt.

Die eine oder mehreren Dichtungen umschließen eine Aussparung 148 im Flansch 140, durch welche die erste Kanalöffnung 136 und die zweite Kanalöffnung 137 in Fluidverbindung stehen. Ein erstes (in Figur 5 in vertikaler Richtung dargestelltes) Quermaß entspricht dem einheitlichen Durchmesser der ersten Kanalöffnung 136 und der zweiten Kanalöffnung 137. Ein zweites (in Figur 5 horizontal dargestelltes) Quermaß der Aussparung 148 ist gegenüber dem ersten Quermaß um den seitlichen Abstand der ersten Kanalöffnung 136 und der zweiten Kanalöffnung 137 vergrößert.

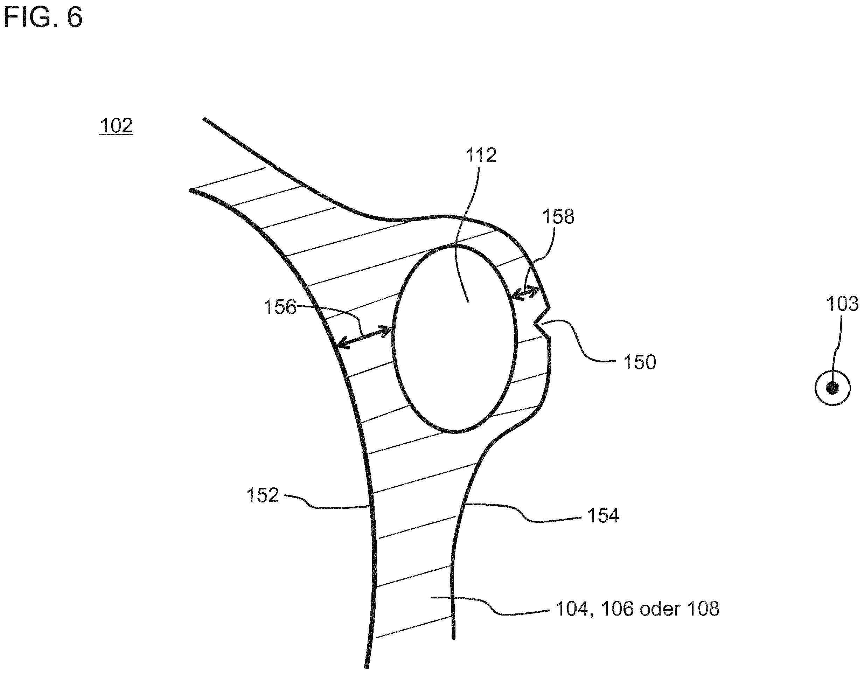

Figur 6 zeigt schematisch einen zur Längsrichtung 103 senkrechten Querschnitt durch ein viertes Ausführungsbeispiel des Gehäuses 102. Merkmale, die funktional oder strukturell denen eines der vorherigen Ausführungsbeispiele entsprechen, sind mit übereinstimmenden Bezugszeichen versehen. Die in der Figur 6 dargestellte Implementierung einer Sollbruchstelle 150 kann in jedem der vorstehend genannten Ausführungsbeispiele implementiert werden. Beispielsweise ist die Sollbruchstelle 150 an einzelnen Stellen entlang des Kanals 112, durchgehend entlang eines oder mehrerer der Kanalabschnitte 113 in Längsrichtung und/oder durchgehend entlang eines oder mehrerer der Kanalabschnitte 130 in radialer Richtung ausgebildet.

Der Kanal 112 verläuft zwischen einer Innenseite 152 der Gehäusewand und einer Außenseite 154 der Gehäusewand. Die Sollbruchstelle 150 ist ein lokales oder (beispielsweise im Querschnitt) globales Minimum der verbleibenden Wandstärke zwischen dem Kanal 112 und der Außenseite 154. Der Kanal 112 ist mit der Gehäusewand (beispielsweise der Gehäusewand 104, 106 und/oder 108) integral-einstückig ausgebildet.

Vorzugsweise ist eine Innenwandstärke 156 zwischen dem Kanal 112 und der Innenseite 152 größer als eine Außenwandstärke 158 zwischen dem Kanal 112 und der Außenseite 154. Die Sollbruchstelle 150 ist beispielsweise durch eine zum Kanal 112 parallele Kerbe in der Außenseite 154 gebildet. Beispielsweise ist an der Sollbruchstelle 150 die Außenwandstärke 158 um 25 % bis 75 %, beispielsweise um 50 %, verringert.

Obwohl die Erfindung unter Bezugnahme auf bestimmte Ausführungsbeispiele beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

- 100: Mechanikstrang eines Fahrzeugantriebs
- 102: Gehäuse des Mechanikstrangs
- 103: Längsrichtung
- 104: Gehäusewand der Kurbelwelle
- 105: Kurbelwelle
- 106: Gehäusewand des Schwungrads
- 107: Schwungrad
- 108: Gehäusewand des Getriebes
- 109: Getriebewellen
- 110: Brennkraftmaschine
- 112: Kanäle
- 113: Kanalabschnitt parallel zur Längsrichtung
- 114: Kanalöffnung in den Flanschflächen
- 115: Durchgangsloch
- 116: Anschluss
- 118: Luftpresser
- 120: Motorkühler
- 122: Anschlussstrecke
- 124: Wärmetauscher
- 126: Plattenwärmtauscher einer Klimaanlage
- 128: Umwälzpumpe
- 130: Kanalabschnitt radial zur Längsrichtung
- 132: Abschlussmodul
- 134: Querverbindung
- 136: Erste Kanalöffnung
- 137: Zweite Kanalöffnung
- 138: Zwischenmodul
- 140: Flansch
- 142: Flanschschrauben
- 144: Aussparungen einer Labyrinthdichtung
- 145: Auskragungen der Labyrinthdichtung
- 146: O-Ring
- 147: Auskragung zur O-Ringdichtung
- 148: Aussparung
- 150: Sollbruchstelle
- 152: Innenseite
- 154: Außenseite
- 156: Innenwandstärke
- 158: Außenwandstärke

## Patentansprüche

1. Mechanikstrang (100) zum Antrieb eines Kraftfahrzeugs, insbesondere eines Nutzfahrzeugs, umfassend:
ein zur Aufnahme eines Schmierstoffs abgedichtetes Gehäuse (102) mit mindestens einer Gehäusewand (104, 106, 108);
eine im Gehäuse (102) angeordnete und vom Schmierstoff benetzte Mechanik (105, 107, 109) mit mindestens einer Welle zur Übertragung von Antriebsleistung in Längsrichtung; und
eine Vielzahl an Kanälen (112) zur Aufnahme eines Fluids, wobei zumindest Abschnitte (113) der Kanäle (112) innerhalb der Gehäusewand (104, 106, 108) in Längsrichtung verlaufen und durch die Gehäusewand vom Schmierstoff getrennt sind, wobei die Kanäle (112) mit einem Wärmekreislauf in Fluidverbindung stehen oder bringbar sind,
**gekennzeichnet durch**
Sollbruchstellen in einer Außenfläche der Gehäusewand, die dazu ausgebildet sind, bei einem Druck des Fluids in den Kanälen (112), der größer als eine vorbestimmte Druckschwelle ist, die Kanäle mit dem Äußeren der Gehäusewand in Fluidverbindung zu bringen.

2. Mechanikstrang nach Anspruch 1, wobei die Kanäle (112) mit einem Überdrucksystem und/oder Unterdrucksystem und/oder einem Hydrauliksystem in Fluidverbindung stehen oder bringbar sind.

3. Mechanikstrang nach Anspruch 1 oder 2, wobei das Fluid ein Wärmeträger ist und die Kanäle (112) in Fluidverbindung mit einer Klimaanlage des Kraftfahrzeugs stehen oder bringbar sind.

4. Mechanikstrang nach einem der Ansprüche 1 bis 3, wobei das Fluid ein Heizmedium ist und die Kanäle (112) in Fluidverbindung mit einer Heizung des Kraftfahrzeugs stehen oder bringbar sind.

5. Mechanikstrang nach einem der Ansprüche 1 bis 4, wobei die Kanäle (112) innerhalb der Gehäusewand parallel zur Gehäusewand (104, 106, 108) verlaufen.

6. Mechanikstrang nach einem der Ansprüche 1 bis 5, wobei mindestens ein weiterer Abschnitt (130) der Kanäle (112) innerhalb der Gehäusewand (104, 106, 108) quer zur Längsrichtung verläuft.

7. Mechanikstrang nach einem der Ansprüche 1 bis 6, wobei mindestens einer der Kanäle (112) in einen außerhalb des Gehäuses (102) zugänglichen Anschluss (116) mündet.

8. Mechanikstrang nach einem der Ansprüche 1 bis 7, wobei an einem ersten Ende des Mechanikstrangs (100) ein erstes Modul und an einem dem ersten Ende in Längsrichtung gegenüberliegenden zweiten Ende des Mechanikstrangs ein zweites Modul angeordnet oder anordenbar ist, und wobei das erste Modul und das zweite Modul über die Kanäle (112) in Fluidverbindung stehen oder bringbar sind.

9. Mechanikstrang nach Anspruch 8, wobei das erste Modul und/oder das zweite Modul am jeweiligen Ende mit der Mechanik des Mechanikstrangs (100) gekoppelt sind.

10. Mechanikstrang nach Anspruch 8 oder 9, wobei das erste Modul einen Kühler (120) und das zweite Modul einen Wärmetauscher (124) umfasst.

11. Mechanikstrang nach einem der Ansprüche 1 bis 10, wobei die Mechanik eine Kurbelwelle (105) einer Brennkraftmaschine (110), ein Schwungrad (107), eine Kupplung, ein Getriebe (109), eine Dauerbremse und/oder eine elektrische Maschine und/oder einen Nebenabtrieb umfasst.

12. Mechanikstrang nach einem der Ansprüche 1 bis 11, wobei eine Wärmeleitfähigkeit der Gehäusewand (104, 106, 108) mit den Kanälen (112) höchstens halb so groß ist wie die Wärmeleitfähigkeit einer massiven Wand gleichen Materials und gleicher Wanddicke wie die Gehäusewand (104, 106, 108).

13. Mechanikstrang nach einem der Ansprüche 1 bis 12, wobei eine Steifigkeit der Gehäusewand (104, 106, 108) mit den Kanälen (112) größer ist als eine Steifigkeit einer massiven Wand gleichen Materials und gleicher Masse wie die Gehäusewand (104, 106, 108).

14. Mechanikstrang nach einem der Ansprüche 1 bis 13, wobei sich die Kanäle (112) über zwei oder mehr Gehäusewände (104, 106, 108) in Längsrichtung erstrecken, die Gehäusewände (104, 106, 108) in Längsrichtung an Flanschflächen miteinander verbunden sind, und die Kanäle (112) jeweils über Öffnungen in der Flanschfläche in Fluidverbindung stehen.

15. Kraftfahrzeug, insbesondere Nutzfahrzeug, mit einem Antriebstrang, der einen Mechanikstrang (100) gemäß einem der Ansprüche 1 bis 14 umfasst.

## Claims

1. Mechanical train (100) for the drive of a motor vehicle, in particular of a commercial vehicle, comprising:
a housing (102) which is sealed in order to receive a lubricant and has at least one housing wall (104, 106, 108) ;
a mechanical system (105, 107, 109) which is arranged in the housing (102), is wetted by the lubricant, and has at least one shaft for the transmission of drive power in the longitudinal direction; and
a multiplicity of channels (112) for receiving a fluid, at least sections (113) of the channels (112) running within the housing wall (104, 106, 108) in the longitudinal direction and being separated from the lubricant by way of the housing wall, the channels (112) being connected fluidically or being capable of being connected fluidically to a thermal circuit,
**characterized by**
predetermined break points in an outer face of the housing wall, which predetermined break points are configured to connect the channels fluidically to the exterior of the housing wall in the case of a pressure of the fluid in the channels (112), which pressure is greater than a predefined pressure threshold.

2. Mechanical train according to Claim 1, the channels (112) being connected fluidically or being capable of being connected fluidically to a pressurized system and/or a negative pressure system and/or a hydraulic system.

3. Mechanical train according to Claim 1 or 2, the fluid being a heat exchange medium, and the channels (112) being connected fluidically or being capable of being connected fluidically to an air conditioning system of the motor vehicle.

4. Mechanical train according to one of Claims 1 to 3, the fluid being a heating medium, and the channels (112) being connected fluidically or being capable of being connected fluidically to a heater of the motor vehicle.

5. Mechanical train according to one of Claims 1 to 4, the channels (112) running within the housing wall parallel to the housing wall (104, 106, 108).

6. Mechanical train according to one of Claims 1 to 5, at least one further section (130) of the channels (112) running within the housing wall (104, 106, 108) transversely with respect to the longitudinal direction.

7. Mechanical train according to one of Claims 1 to 6, at least one of the channels (112) opening into a connector (116) which is accessible outside the housing (102) .

8. Mechanical train according to one of Claims 1 to 7, a first module being arranged or being capable of being arranged at a first end of the mechanical train (100), and a second module being arranged or being capable of being arranged at a second end of the mechanical train, which second end lies opposite the first end in the longitudinal direction, and the first module and the second module being connected fluidically or being capable of being connected fluidically via the channels (112) .

9. Mechanical train according to Claim 8, the first module and/or the second module being coupled at the respective end to the mechanical system of the mechanical train (100).

10. Mechanical train according to Claim 8 or 9, the first module comprising a cooler (120), and the second module comprising a heat exchanger (124).

11. Mechanical train according to one of Claims 1 to 10, the mechanical system comprising a crankshaft (105) of an internal combustion engine (110), a flywheel (107), a clutch, a transmission (109), a sustained action brake and/or an electric machine and/or a power take-off.

12. Mechanical train according to one of Claims 1 to 11, a thermal conductivity of the housing wall (104, 106, 108) with the channels (112) being at most half as great as the thermal conductivity of a solid wall of identical material and identical wall thickness as the housing wall (104, 106, 108).

13. Mechanical train according to one of Claims 1 to 12, a rigidity of the housing wall (104, 106, 108) with the channels (112) being greater than a rigidity of a solid wall of identical material and identical mass as the housing wall (104, 106, 108).

14. Mechanical train according to one of Claims 1 to 13, the channels (112) extending via two or more housing walls (104, 106, 108) in the longitudinal direction, the housing walls (104, 106, 108) being connected to one another in the longitudinal direction on flange faces, and the channels (112) being connected fluidically in each case via openings in the flange face.

15. Motor vehicle, in particular commercial vehicle, having a drive train which comprises a mechanical train (100) according to one of Claims 1 to 14.

## Revendications

1. Transmission mécanique (100) pour l'entraînement d'un véhicule automobile, en particulier d'un véhicule utilitaire, comprenant :
un boîtier (102) étanchéifié pour recevoir un lubrifiant, avec au moins une paroi de boîtier (104, 106, 108) ;
un mécanisme (105, 107, 109) disposé dans le boîtier (102) et mouillé avec le lubrifiant, comprenant au moins un arbre pour le transfert de la puissance d'entraînement dans la direction longitudinale ; et
une pluralité de canaux (112) pour recevoir un fluide, au moins des sections (113) des canaux (112) s'étendant dans la direction longitudinale à l'intérieur de la paroi de boîtier (104, 106, 108) et étant séparées du lubrifiant par la paroi de boîtier, les canaux (112) étant ou pouvant être amenés en liaison fluidique avec un circuit de chaleur,
**caractérisée par**
des zones destinées à la rupture dans une surface extérieure de la paroi de boîtier, lesquelles sont réalisées de manière à amener les canaux en liaison fluidique avec l'extérieur de la paroi de boîtier dans le cas d'une pression du fluide dans les canaux (112) qui est supérieure à un seuil de pression prédéterminé.

2. Transmission mécanique selon la revendication 1, dans laquelle les canaux (112) sont ou peuvent être amenés en liaison fluidique avec un système de surpression et/ou un système de dépression et/ou un système hydraulique.

3. Transmission mécanique selon la revendication 1 ou 2, dans laquelle le fluide est un fluide caloporteur et les canaux (112) sont ou peuvent être amenés en liaison fluidique avec une installation de climatisation du véhicule automobile.

4. Transmission mécanique selon l'une quelconque des revendications 1 à 3, dans laquelle le fluide est un milieu chauffant et les canaux (112) sont ou peuvent être amenés en liaison fluidique avec un chauffage du véhicule automobile.

5. Transmission mécanique selon l'une quelconque des revendications 1 à 4, dans laquelle les canaux (112) s'étendent à l'intérieur de la paroi de boîtier parallèlement à la paroi de boîtier (104, 106, 108).

6. Transmission mécanique selon l'une quelconque des revendications 1 à 5, dans laquelle au moins une section supplémentaire (130) des canaux (112) s'étend transversalement à la direction longitudinale à l'intérieur de la paroi de boîtier (104, 106, 108).

7. Transmission mécanique selon l'une quelconque des revendications 1 à 6, dans laquelle au moins l'un des canaux (112) débouche dans un raccord (116) accessible à l'extérieur du boîtier (102).

8. Transmission mécanique selon l'une quelconque des revendications 1 à 7, dans laquelle un premier module est ou peut être disposé au niveau d'une première extrémité de la transmission mécanique (100), et un deuxième module est ou peut être disposé au niveau d'une deuxième extrémité de la transmission mécanique opposée à la première extrémité dans la direction longitudinale, le premier module et le deuxième module étant ou pouvant être amenés en liaison fluidique par le biais des canaux (112).

9. Transmission mécanique selon la revendication 8, dans laquelle le premier module et/ou le deuxième module sont accouplés à l'extrémité respective au mécanisme de la transmission mécanique (100).

10. Transmission mécanique selon la revendication 8 ou 9, dans laquelle le premier module comprend un radiateur (120) et le deuxième module comprend un échangeur de chaleur (124).

11. Transmission mécanique selon l'une quelconque des revendications 1 à 10, dans laquelle le mécanisme comprend un vilebrequin (105) d'un moteur à combustion interne (110), un volant d'inertie (107), un embrayage, une boîte de vitesses (109), un frein de service et/ou une machine électrique et/ou une prise de force auxiliaire.

12. Transmission mécanique selon l'une quelconque des revendications 1 à 11, dans laquelle une conductibilité thermique de la paroi de boîtier (104, 106, 108) avec les canaux (112) vaut au maximum la moitié de la conductibilité thermique d'une paroi massive en matériau identique et de même épaisseur de paroi que la paroi de boîtier (104, 106, 108).

13. Transmission mécanique selon l'une quelconque des revendications 1 à 12, dans laquelle une rigidité de la paroi de boîtier (104, 106, 108) avec les canaux (112) est supérieure à une rigidité d'une paroi massive en matériau identique et de même masse que la paroi de boîtier (104, 106, 108).

14. Transmission mécanique selon l'une quelconque des revendications 1 à 13, dans laquelle les canaux (112) s'étendent sur deux ou plus de deux parois de boîtier (104, 106, 108) dans la direction longitudinale, les parois de boîtier (104, 106, 108) sont connectées les unes aux autres dans la direction longitudinale au niveau de faces de brides, et les canaux (112) sont en liaison fluidique à chaque fois par le biais d'ouvertures dans la face de bride.

15. Véhicule automobile, en particulier véhicule utilitaire, comprenant une chaîne cinématique qui comprend une transmission mécanique (100) selon l'une quelconque des revendications 1 à 14.
